# EUROPEAN PATENT SPECIFICATION

(11) **EP 1 642 993 B1**
(45) Date of publication and mention of the grant of the patent: **21.11.2012**
(21) Application number: 05256185.9
(22) Date of filing: 04.10.2005
(51) Int. Cl.: C23C 28/00, C23C 28/02, C23C 30/00, C23C 4/10, C23C 4/12, F01D 5/28, F01D 11/12

(54) **Segmented gadolinia zirconia coatings**
Segmentierte Gadoliniumoxid-Zirkonoxid-Beschichtungen
Revêtements segmentés en oxydes de gadolinium et de zirconium

(30) Priority: 04.10.2004 US 957804
(43) Date of publication of application: 05.04.2006
(73) Proprietor: United Technologies Corporation, Hartford, Connecticut 06101 (US)
(72) Inventor: Cottom, Brent Allen, Dublin, CA 94568 (US); Narsavage, Stephen, Jupiter, FL 33458 (US)
(74) Representative: Taylor, Adam David

(56) References cited:
- EP-A- 1 428 908
- WO-A-03/057941
- US-A- 5 705 231
- US-A1- 2004 156 724
- WU J ET AL: "High-temperature chemical stability of low thermal conductivity ZrO2-GdO1.5 thermal-barrier ceramics in contact with alpha-Al2O3" SCRIPTA MATERIALIA, ELSEVIER, AMSTERDAM, NL, vol. 50, no. 10, May 2004 (2004-05), pages 1315-1318, XP004495658 ISSN: 1359-6462

## Description

The present invention relates generally to segmented ceramic coatings, abradable coatings, and thermal barrier coatings. More specifically, the present invention relates to segmented gadolinia zirconia coatings that can be used as abradable coatings and/or thermal barrier coatings, and methods of making same.

Gas turbine engines have long been used to convert chemical potential energy, in the form of fuel, to thermal energy, and then to mechanical energy for use in propelling aircraft, generating electric power, pumping fluids, etc. The efficiency of gas turbine engines increases with increasing operating temperatures. Therefore, there is a large incentive to raise the combustion and exhaust gas temperatures of such engines. However, the metallic materials currently used in hot-section components of such engines operate at temperatures very near the upper limits of their thermal stability. In fact, in the hottest sections of modern gas turbine engines, metallic materials are utilized in hot gas paths at temperatures above their melting points. These metallic materials survive such temperatures only because they are air cooled, or because they comprise ceramic coatings thereon that lower the thermal conductivity of the component, thereby allowing the components to be operated at higher temperatures while utilizing less cooling air. In addition to acting as thermal insulators, such ceramic coatings also provide environmental protection to the metallic components, protecting the components against the oxidative and corrosive effects of the hot gases passing therethrough or thereby. Furthermore, such ceramic coatings may also provide abradability and erosion resistance to the components, allowing them to be utilized in sealing mechanisms to limit the leakage of gas flow from the engine, thereby improving the engine efficiency and performance.

Segmented ceramic coatings are useful for improving the thermal shock resistance, thermal fatigue resistance, strain tolerance, and resistance to spalling of a coated component, as well as for improving the abradability of such components. However, when such coatings on gas turbine engine components fail (i.e., due to erosion, spalling, etc.), the underlying alloy material of the component is exposed to extreme temperatures, which accelerates the oxidation and/or corrosion of the alloy material, leading to the component's ultimate failure. Therefore, it would be beneficial to have segmented ceramic coatings that are more durable, more thermally shock resistant, and more thermally insulating than existing segmented ceramic coatings.

Existing segmented ceramic coatings are created in a variety of manners. Some coatings comprise a network of deliberately introduced microcracks that are created by scanning a laser beam over a plasma-sprayed ceramic surface to melt a thin layer of the ceramic, and thereafter allowing the shrinkage that occurs during cooling and solidification of the melted ceramic to produce a network of microcracks in the ceramic, wherein the network of microcracks resists the formation and growth of catastrophic cracks during thermal shock exposure. Other coatings comprise a network of deliberately introduced microcracks that are created by quenching the surface of a ceramic coating while it is hot to introduce microcracks therein, thereby improving the thermal fatigue resistance of the coating. Still other coatings comprise a segmented morphology that is created by laser machining an array of slots or grooves into more than half the coating thickness, thereby making the coating strain tolerant and resistant to spalling. Yet other coatings comprise a grid of machined slant-steps isolated by grooves or gaps that are created by plasma spraying a stabilized zirconia layer onto the machined slant-steps at an angle that causes deep shadow gaps to form in the zirconia layer, effectively segmenting the zirconia layer and making the coating strain tolerant and resistant to spalling. These existing segmented ceramic coatings all require some sort of machining or other processing to create the desired segmented morphology therein.

One method of creating segmented ceramic coatings that does not require additional processing steps or machining comprises utilizing precisely controlled deposition parameters to induce segmentation to form in the coating during plasma spraying thereof. Such plasma spraying techniques have been used to produce a variety of segmented ceramic coatings, but have never been used to produce segmented gadolinia zirconia coatings. It would be desirable to utilize such plasma spraying techniques to create segmented gadolinia zirconia coatings, which would have a lower thermal conductivity and be more durable and more thermally insulating than existing segmented ceramic coatings.

US-A-5705231 discloses a duct segment having a metallic substrate, a MCrAlY bond coat on the substrate and a segmented abradable coating on the bond coat.

Wu, J. et all, Scripta Materialia 50 (2004) 1315-1318 discloses gadolinia zirconia thermal-barrier ceramics.

The present invention provides a coated component as set out in claim 1, and a method as set out in claim 9.

Accordingly, the above-identified shortcomings of existing segmented ceramic coatings, and methods of making same, are overcome by embodiments of the present invention, which relates to segmented gadolinia zirconia coatings, and methods for making same. These coatings have superior abradability and erosion resistance, are more durable, have a lower thermal conductivity, and provide better thermal insulation for a given coating thickness than existing segmented ceramic coatings. Furthermore, since the deposition parameters of this invention are precisely controlled, the segmentation of these coatings is induced during the plasma spraying thereof. Therefore, no additional processing or machining is required to produce the desired segmented morphology in the segmented gadolinia zirconia coatings of this invention.

Embodiments of this invention comprise segmented gadolinia zirconia coatings created by plasma spraying a gadolinia zirconia coating onto a bond-coated substrate under predetermined conditions so that segmentation is induced in the gadolinia zirconia coating during plasma spraying thereof. The predetermined conditions comprise maintaining a constant spray-gun-to-part distance of 1-5 inches (2.5 to 12.7 cm) during plasma spraying.

Embodiments of this invention also comprise coated components comprising a metallic substrate; a MCrAlY bond coat disposed on the metallic substrate, wherein M denotes nickel, cobalt, iron, or mixtures thereof; and a segmented gadolinia zirconia coating disposed on the MCrAlY bond coat. The segmented gadolinia zirconia coating may comprise a base foundation layer disposed on the MCrAlY bond coat; a graded interlayer disposed on the base foundation layer; and an abradable gadolinia zirconia top layer disposed on the graded interlayer, wherein the graded interlayer comprises a compositional blend of the base foundation layer and the abradable gadolinia zirconia top layer. The base foundation layer may comprise magnesia stabilized zirconia, calcia stabilized zirconia, yttria stabilized zirconia, gadolinia zirconia, and/or mixtures thereof. The base foundation layer, the graded interlayer, and the abradable gadolinia zirconia top layer may all be deposited via air plasma spraying.

Preferably these segmented gadolinia zirconia coatings comprise vertical segmentation therein approximately perpendicular to the surface of the substrate upon which the gadolinia zirconia is plasma sprayed. There may be about 4-50 substantially vertical microcracks per inch (1.6 to 20 microcracks per cm), or an average of about 25 substantially vertical microcracks per inch (10 microcracks per cm). These segmented gadolinia zirconia coatings may be utilized as abradable coatings and/or thermal barrier coatings on gas turbine engine components, such as, for example, blade outer air seals, burner floatwalls, turbine blades, turbine vanes, combustor panels, turbine exhaust cases, and augmentor liners, or other articles.

Embodiments of this invention also comprise methods for producing a segmented gadolinia zirconia coating. These methods may comprise the steps of: providing a metallic substrate; applying a MCrAlY bond coat on the metallic substrate, wherein M denotes nickel, cobalt, iron, or mixtures thereof; and plasma spraying a gadolinia zirconia coating on the MCrAlY bond coat under predetermined conditions so as to induce segmentation in the gadolinia zirconia coating during plasma spraying thereof.

Further features, aspects and advantages of the present invention will be readily apparent to those skilled in the art during the course of the following description, wherein references are made to the accompanying figures which illustrate some preferred forms of the present invention, and wherein like characters of reference designate like parts throughout the drawings.

Preferred embodiments of the present invention will now be described by way of example only and with reference to the accompanying drawings, in which:
Figure 1 is a schematic diagram showing an exemplary one-layer segmented gadolinia zirconia coating, as utilized in embodiments of this invention;
Figure 2 is a schematic diagram showing an exemplary three-layered segmented gadolinia zirconia coating, as utilized in embodiments of this invention;
Figure 3 is an optical micrograph showing a single-layer segmented gadolinia zirconia coating comprising about 30 weight percent gadolinia zirconia, as utilized in embodiments of this invention; and
Figure 4 is an optical micrograph showing a single-layer segmented gadolinia zirconia coating comprising about 59 weight percent gadolinia zirconia, as utilized in other embodiments of this invention.

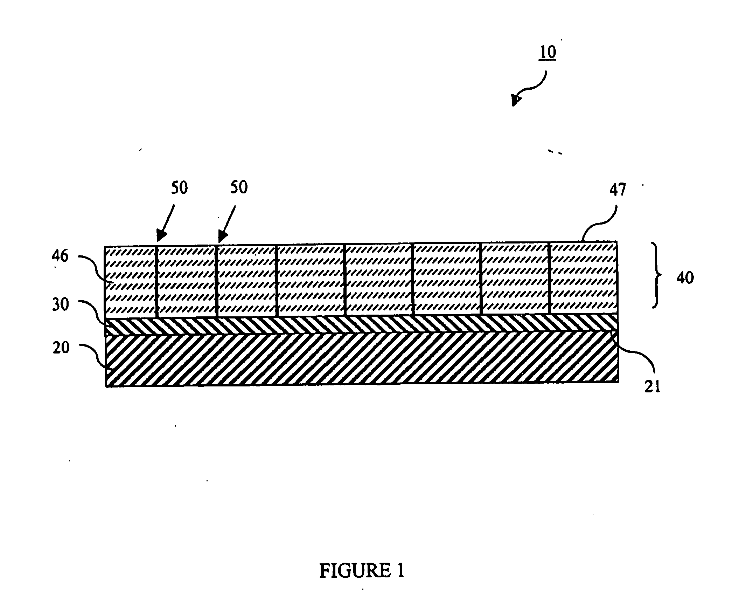

For the purposes of promoting an understanding of the invention, reference will now be made to some preferred embodiments of this invention as illustrated in FIGURES 1-4 and specific language used to describe the same. The terminology used herein is for the purpose of description, not limitation. Specific structural and functional details disclosed herein are not to be interpreted as limiting, but merely as a basis for teaching one skilled in the art to variously employ the present invention. Any modifications or variations in the depicted structures and methods, and such further applications of the principles of the invention as illustrated herein, as would normally occur to one skilled in the art, are considered to be within the scope of this invention as defined by the claims.

This invention relates to segmented gadolinia zirconia coatings. While gadolinia zirconia has been used in thermal barrier coatings, it has never been used in segmented ceramic coatings before. However, experience with gadolinia zirconia as a thermal barrier coating indicates that gadolinia zirconia should make a superior segmented ceramic coating. Gadolinia zirconia is a better insulator and is more resistant to sintering than yttria, calcia, magnesium and ceria stabilized zirconias, which are the materials typically used in segmented ceramic coatings. Therefore, segmented gadolinia zirconia coatings should have superior abradability and erosion resistance, be more durable, have a lower thermal conductivity, and provide better thermal insulation for a given coating thickness than existing segmented ceramic coatings comprising yttria, calcia, magnesium and ceria stabilized zirconias. Such properties should allow overall gas turbine engine performance to be improved (i.e., allow higher operating temperatures to be achieved, allow longer operating life, etc.).

Embodiments of this invention comprise segmented gadolinia zirconia coatings comprising one or more layers, depending upon the final use of the coated substrate. In some applications, a single layer of segmented gadolinia zirconia coating may be desirable. In other applications, a double-layer or multi-layer segmented gadolinia zirconia coating may be desirable.

Referring now to Figure 1, an exemplary segmented abradable gadolinia zirconia coating system is shown. The exemplary one-layer system utilized in embodiments of this invention comprises a metallic substrate 20, a bond coat 30 disposed on the metallic substrate 20, and a one-layer segmented gadolinia zirconia coating 40. This one-layer segmented gadolinia zirconia coating 40 comprises only an abradable top layer 46 disposed on the bond coat 30.

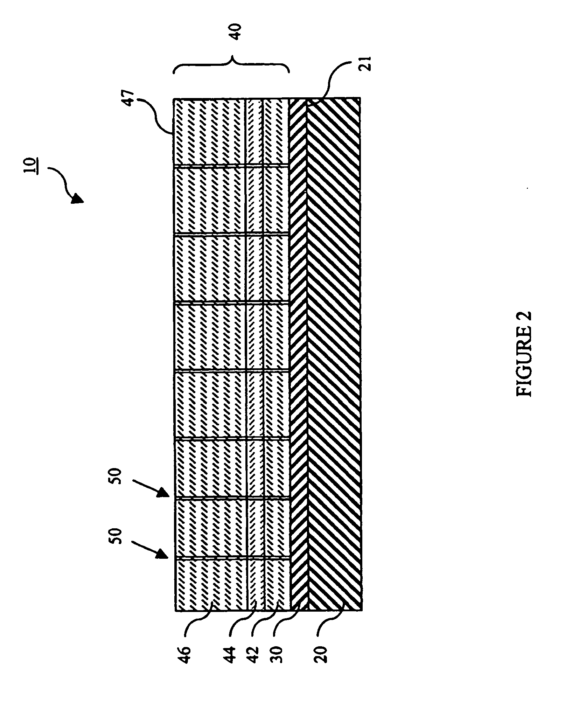

Referring now to Figure 2, another exemplary segmented gadolinia zirconia coating system 10 is shown. The exemplary three-layer system utilized in embodiments of this invention comprises a metallic substrate 20, a bond coat 30 disposed on the metallic substrate 20, and a three-layer segmented gadolinia zirconia coating 40. The three-layer segmented gadolinia zirconia coating 40 comprises a base foundation layer 42 disposed on the bond coat 30, a graded interlayer 44 disposed on the base foundation layer 42, and an abradable top layer 46 disposed on the graded interlayer 44. Three-layer segmented gadolinia zirconia coatings 40 are desirable in many applications because they allow the long-term thermal insulation benefits provided by the base foundation layer 42 and the graded interlayer 44, as well as the abradability benefits provided by the abradable top layer 46, to be tailored for a specific end use.

The metallic substrate 20 may comprise any suitable material, such as, for example, a nickel-based superalloy, an iron-based superalloy, a cobalt-based superalloy, a refractory-based superalloy, etc. A typical nickel-based superalloy utilized in gas turbine engine components comprises, in weight percent, about 1-25% cobalt, about 1-25% chromium, about 0-8% aluminum, about 0-10% molybdenum, about 0-15% tungsten, about 0-12% tantalum, about 0-5% titanium, about 0-7% rhenium, about 0-6% ruthenium, about 0-4% niobium, about 0-0.2% carbon, about 0-0.15% boron, about 0-0.05% yttrium, about 0-1.6% hafnium, with the balance being nickel and incidental impurities.

The bond coat 30 is a MCrAIY bond coat wherein M denotes nickel, cobalt, iron, or mixtures thereof. The bond coat 30 may be applied to the metallic substrate 20 in any manner capable of producing a dense, uniform, adherent coating. Some suitable non-limiting methods for applying the bond coat 30 include air plasma spraying, low-pressure vacuum spraying, and/or, preferably, high velocity oxy-fuel spraying.

The abradable top layer 46 of this invention comprises gadolinia zirconia. The base foundation layer 42 of this invention may comprise a zirconia-based material such as, for example, magnesia stabilized zirconia, calcia stabilized zirconia, yttria stabilized zirconia, gadolinia zirconia, and/or mixtures thereof, and is preferably 7 weight percent yttria stabilized zirconia for improved durability. The graded interlayer 44 of this invention preferably comprises a compositional blend of the base foundation layer 42 and the abradable top layer 46, which is typically varied from a starting composition of the base foundation layer 42 to a final composition of the abradable top layer 46. The graded interlayer 44 provides a strength link between the base foundation layer 42 and the abradable top layer 46. The base foundation layer 42, the graded interlayer 44, and the abradable top layer 46 are preferably applied to the bond coat 30 via air plasma spraying in one continuous spray process. However, three separate spray processes may be utilized. Air plasma spraying is preferred because segmented ceramic coatings that are air plasma sprayed are more durable than conventional microcracked ceramic coatings.

Segmentation 50 is created in these segmented gadolinia zirconia coatings 40 by precisely controlling the deposition parameters so that segmentation 50 is created in the coating during plasma spraying thereof. The segmentation 50 in these coatings imparts compliance to the coating, permitting it to expand and contract during thermal cycling, thereby reducing its likelihood of spalling during operation. In general, a close spray-gun-to-part distance (i.e., about 2.5-12.7 cm (1-5 inches)) coupled with relatively high powder deposition rates should result in the desired segmentation 50 in the final segmented gadolinia zirconia coating 40. The specific processing parameters are dependent upon a number of variables, including but not limited to, the spray guns and fixturing used, and the operating conditions associated therewith. More details about methods of producing this segmentation can be found in commonly-owned U.S. Patent No. 5,705,231.

In embodiments, fused and crushed powders may be used in the plasma spraying process, but the coatings of this invention can also be created with other powders, such as, for example, spray dried and sintered powders. In embodiments, spray dried and sintered powders may be preferred because they are spherical, hollow particles that create increased abradability in the final segmented gadolinia zirconia coatings 40.

The segmented abradable gadolinia zirconia coatings 40 of this invention comprise substantially vertical segmentation 50 therein. As used herein and throughout, substantially vertical segmentation means that the segmentation 50 is approximately perpendicular (i.e., within about 30° of being perpendicular) to the surface 21 of the metallic substrate 20 upon which the segmented gadolinia zirconia coating 40 is ultimately disposed. Figure 2 shows the segmentation 50 extending continuously through all three layers of the three-layer segmented gadolinia zirconia coating 40: the base foundation layer 42, the graded interlayer 44, and the abradable top layer 46. Since the segmentation 50 is induced during fabrication, the segmentation 50 generally begins in the base foundation layer 42 and then extends into the subsequently applied layers, and is therefore present in all layers of the segmented gadolinia zirconia coating 40 (i.e., in the base foundation layer 42, the graded interlayer 44, and the abradable top layer 46). However, the segmentation 50 does not have to be continuous across all the layers 42, 44 and 46. For example, in embodiments, the base foundation layer 42 may have more segmentation 50 than the graded interlayer 44 and/or the abradable top layer 46. Ideally, for improved durability, this segmentation 50 does not extend into the bond coat 30. Embodiments may comprise segmentation 50 therein that extends only partially through the segmented gadolinia zirconia coating 40, such as partially through the graded interlayer 44 and into the abradable top layer 46, but the durability of these embodiments will likely be less than the durability of embodiments where the segmentation 50 extends throughout the entire segmented gadolinia zirconia coating 40.

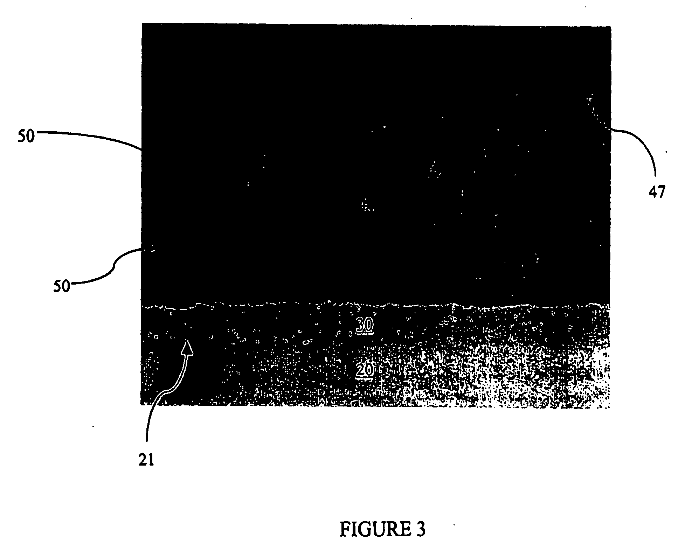

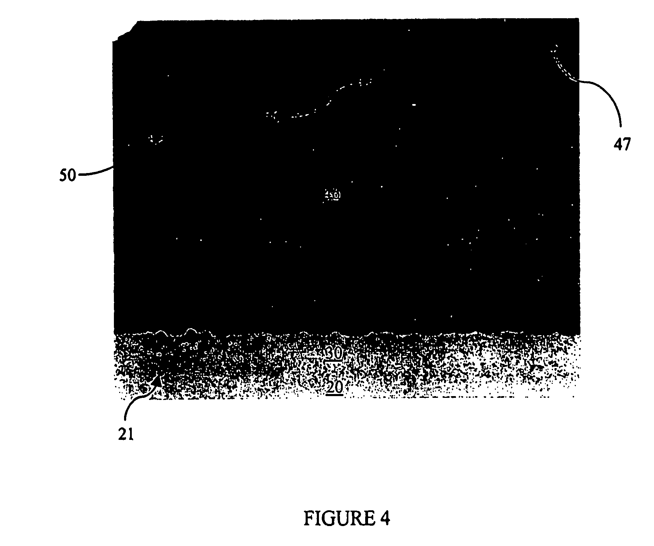

In two exemplary embodiments, as depicted in Figures 3 and 4, a bond coat of NiCoCrAIY was deposited on a PWA 1484 metallic substrate via HVOF spraying. After diffusion heat treating the HVOF bond coat, the segmented gadolinia zirconia coatings were then air plasma sprayed onto the bond coat using a spray-gun-to-part distance of approximately 7 cm (2.75 inches). The gadolinia zirconia coatings comprised fused and crushed 30 weight percent gadolinia zirconia in one embodiment, and fused and crushed 59 weight percent gadolinia zirconia in the other. After the segmented gadolinia zirconia coating 40 was applied, the coated substrates 10 were heat treated at about 1079 ± 14°C (1975 ± 25°F) for about 4 hours in a protective atmosphere, and then cooled at a rate of at least about 5.6 K/min (10°F/minute).

Figure 3 shows an optical micrograph of the single-layer segmented gadolinia zirconia coating comprising about 30 weight percent gadolinia zirconia at about 50X magnification. Figure 4 shows an optical micrograph of the single-layer segmented gadolinia zirconia coating comprising about 59 weight percent gadolinia zirconia at about 50X magnification. As shown herein, the segmentation 50 in both Figures 3 and 4 is substantially vertical with respect to the surface 21 of the metallic substrate 20.

Many other embodiments of the segmented gadolinia zirconia coatings of this invention are possible. For example, multi-layer segmented gadolinia zirconia coatings are possible. However, since there is a tradeoff between the durability and thermal conductivity of the coating that is dependent upon the gadolinia content, the amount of gadolinia present depends on the application. For many applications, the coatings comprise about 30 weight percent gadolinia zirconia.

These segmented gadolinia zirconia coatings 40 may be used for various applications as abradable coatings and/or as thermal barrier coatings. Such coatings 40 may be utilized on gas turbine engine components, such as, for example, on blade outer air seals, burner floatwalls, turbine blades, turbine vanes, combustor panels, turbine exhaust cases, augmentor liners, and any other gas turbine engine components that may have abradable coatings and/or thermal barrier coatings thereon.

As described above, this invention provides segmented gadolinia zirconia coatings and methods of making or applying same. Advantageously, these coatings have many benefits over existing segmented ceramic coatings and thermal barrier coatings. These coatings may be used on gas turbine engine components and may allow higher operating temperatures and/or longer operating lives to be achieved therefrom. Many other embodiments and advantages will be apparent to those skilled in the relevant art.

Various embodiments of this invention have been described in fulfillment of the various needs that the invention meets. It should be recognized that these embodiments are merely illustrative of the principles of various embodiments of the present invention. Numerous modifications and adaptations thereof will be apparent to those skilled in the art without departing from the scope of the present invention. For example, while this invention was described herein as being utilized in gas turbine engines, this invention may also be utilized in other applications where high temperatures are encountered, such as in furnaces and internal combustion engines. Thus, it is intended that the present invention cover all suitable modifications and variations as come within the scope of the appended claims.

## Claims

1. A coated component comprising:
a metallic substrate (20); and
a MCrAlY bond coat (30) disposed on the metallic substrate, wherein M denotes nickel, cobalt, iron, or mixtures thereof;
**characterized by**:
a segmented gadolinia zirconia coating (40) disposed on the MCrAlY bond coat, wherein the coating (40) comprises about 30 weight percent gadolinia zirconia or about 59 weight percent gadolinia zirconia.

2. The coated component of claim 1, wherein the segmented gadolinia zirconia coating (40) comprises vertical segmentation therein approximately perpendicular to a surface of the metallic substrate (20) upon which the segmented gadolinia zirconia coating is ultimately disposed.

3. The coated component of claim 1 or 2, wherein the segmented gadolinia zirconia coating (40) comprises 4-50 substantially vertical microcracks per inch (1.6 to 20 microcracks per cm).

4. The coated component of claim 1, 2 or 3, wherein the segmented gadolinia zirconia coating (40) comprises an average of about 25 substantially vertical microcracks per inch (about 10 microcracks per cm).

5. The coated component of any preceding claim, wherein the metallic substrate (20) comprises an uncoated gas turbine engine component.

6. The coated component of claim 5, wherein the gas turbine engine component comprises at least one of: a blade outer air seal, a burner floatwall a turbine blade, a turbine vane, a combustor panel, a turbine exhaust case, and an augmentor liner.

7. A coated component as claimed in any preceding claim, wherein the segmented gadolinia zirconia coating (40) is segmented ceramic coating system comprising:
a base foundation layer (42);
a graded interlayer (44) disposed on the base foundation layer; and
an abradable gadolinia zirconia top layer (46) disposed on the graded interlayer,
wherein the graded interlayer comprises a compositional blend of the base foundation layer and the abradable gadolinia zirconia top layer.

8. The coated component of claim 7, wherein the base foundation layer (42) comprises at least one of: magnesia stabilized zirconia, calcia stabilized zirconia, yttria stabilized zirconia, gadolinia zirconia, and mixtures thereof.

9. A method for producing a segmented gadolinia zirconia coating, the method comprising the steps of:
providing a metallic substrate (20); and
applying a MCrAlY bond coat (30) on the metallic substrate, wherein M denotes nickel, cobalt, iron, or mixtures thereof;
**characterised by**:
plasma spraying a gadolinia zirconia coating (40) on the MCrAlY bond coat with a constant spray-gun-to-part distance of 1-5 inches (2.5 to 12.7 cm) so as to induce segmentation in the gadolinia zirconia coating during plasma spraying thereof, wherein the coating (40) comprises about 30 weight percent gadolinia zirconia or about 59 weight percent gadolinia zirconia.

10. The method of claim 9, wherein the segmented gadolinia zirconia coating (40) comprises vertical segmentation therein approximately perpendicular to a surface of the metallic substrate (20) upon which the gadolinia zirconia coating is plasma sprayed.

11. The method of claim 9 or 10, wherein the segmented gadolinia zirconia coating (40) comprises 4-50 substantially vertical microcracks per inch (1.6 to 20 microcracks per cm).

12. The method of claim 9, 10 or 11, wherein the segmented gadolinia zirconia coating (40) comprises an average of about 25 substantially vertical microcracks per inch (about 10 microcracks per cm).

## Patentansprüche

1. Beschichtete Komponente aufweisend:
ein metallisches Substrat (20); und
eine MCrAIY-Bindungsschicht (30), die auf dem metallischen Substrat angebracht ist, worin M Nickel, Kobalt, Eisen oder ein Gemisch davon bezeichnet;
**gekennzeichnet durch**:
eine segmentierte Gadoliniumoxid-Zirkoniumdioxid-Beschichtung (40), die auf der MCrAlY-Bindungsschicht angebracht ist, wobei die Beschichtung (40) etwa 30 Gew.% Gadoliniumoxid-Zirkoniumdioxid oder etwa 59 Gew.% Gadoliniumoxid-Zirkoniumdioxid aufweist.

2. Beschichtete Komponente nach Anspruch 1, bei der die segmentierte Gadoliniumoxid-Zirkoniumdioxid-Beschichtung (40) in sich eine vertikale Segmentierung aufweist, die näherungsweise rechtwinklig ist zu einer Oberfläche des metallischen Substrats (20), auf der die segmentierte Gadoliniumoxid-Zirkoniumdioxid-Beschichtung schließlich angebracht ist.

3. Beschichtete Komponente nach Anspruch 1 oder 2, bei der die segmentierte Gadoliniumoxid-Zirkoniumdioxid-Beschichtung (40) 4-50 im wesentlichen vertikale Mikrorisse pro Zoll (1,6 bis 20 Mikrorisse pro cm) aufweist.

4. Beschichtete Komponente nach Anspruch 1, 2 oder 3, bei der die segmentierte Gadoliniumoxid-Zirkoniumdioxid-Beschichtung (40) einen Durchschnitt von etwa 25 im wesentlichen vertikalen Mikrorissen pro Zoll (etwa 10 Mikrorissen pro cm) aufweist.

5. Beschichtete Komponente nach einem vorangehenden Anspruch, bei der das metallische Substrat (20) eine unbeschichtete Gasturbinenmaschinenkomponente aufweist.

6. Beschichtete Komponente nach Anspruch 5, bei der die Gasturbinenmaschinenkomponente mindestens eine der folgenden Komponenten aufweist:
eine äußere Laufschaufel-Luftdichtung, eine Brenner-Floatwand, eine Turbinenlaufschaufel, eine Turbinenleitschaufel, eine Brennerplatte, ein Turbinenaustrittsgehäuse und eine Augmentorauskleidung.

7. Beschichtete Komponente wie in einem vorangehenden Anspruch beansprucht, bei der die segmentierte Gadoliniumoxid-Zirkoniumdioxid-Beschichtung (40) ein segmentiertes keramisches Beschichtungssystem ist, das aufweist:
eine Basisunterlagenschicht (42);
eine Übergangszwischenschicht (44), die auf der Basisunterlagenschicht angebracht ist; und
eine abreibbare Gadoliniumoxid-Zirkoniumdioxid-Deckschicht (46), die auf der Übergangszwischenschicht angebracht ist,
wobei die Übergangszwischenschicht ein Zusammensetzungsgemisch der Basisunterlagenschicht und der abreibbaren Gadoliniumoxid-Zirkoniumdioxid-Deckschicht aufweist.

8. Beschichtete Komponente nach Anspruch 7, bei der die Basisunterlagenschicht (42) mindestens eines der Oxide Magnesiumoxid-stabilisiertes Zirkoniumdioxid, Calciumoxid-stabilisiertes Zirkoniumdioxid, Yttriumoxid-stabilisiertes Zirkoniumdioxid, Gadoliniumoxid-Zirkoniumdioxid und Gemische davon aufweist.

9. Verfahren zur Herstellung einer segmentierten Gadoliniumoxid-Zirkoniumdioxid-Beschichtung, wobei das Verfahren folgende Schritte aufweist:
Bereitstellen eines metallischen Substrats (20); und
Auftragen einer MCrAlY-Bindungsschicht (30) auf das metallische Substrat, worin M Nickel, Kobalt, Eisen oder Gemische davon bezeichnet;
**gekennzeichnet durch**:
Plasmaspritzen einer Gadoliniumoxid-Zirkoniumdioxid-Beschichtung (40) auf die MCrAlY-Bindungsschicht mit einem konstanten Spritzvorrichtung-zu-Teil-Abstand von 1-5 Zoll (2,5 bis 12,7 cm), um während des Plasmaspritzens der Gadoliniumoxid-Zirkoniumdioxid-Beschichtung in ihr eine Segmentierung zu induzieren, wobei die Beschichtung (40) etwa 30 Gew.% Gadoliniumoxid-Zirkoniumdioxid oder etwa 59 Gew.% Gadoliniumoxid-Zirkoniumdioxid aufweist.

10. Verfahren nach Anspruch 9, bei dem die segmentierte Gadoliniumoxid-Zirkoniumdioxid-Beschichtung (40) in sich eine vertikale Segmentierung aufweist, die näherungsweise rechtwinklig zu einer Oberfläche des metallischen Substrats (20) ist, auf die die Gadoliniumoxid-Zirkoniumdioxid-Beschichtung plasmagespritzt wird.

11. Verfahren nach Anspruch 9 oder 10, bei dem die segmentierte Gadoliniumoxid-Zirkoniumdioxid-Beschichtung (40) 4-50 im wesentlichen vertikale Mikrorisse pro Zoll (1,6 bis 20 Mikrorisse pro cm) aufweist.

12. Verfahren nach Anspruch 9, 10 oder 11, bei dem die segmentierte Gadoliniumoxid-Zirkoniumdioxid-Beschichtung (40) einen Durchschnitt von etwa 25 im wesentlichen vertikalen Mikrorissen pro Zoll (etwa 10 Mikrorissen pro cm) aufweist.

## Revendications

1. Composant revêtu comprenant :
un substrat métallique (20) ; et
une couche d'ancrage MCrAlY (30) disposée sur le substrat métallique, où M représente du nickel, du cobalt, du fer ou un mélange de ces derniers ;
**caractérisé par** :
un revêtement d'oxydes de zirconium et de gadolinium segmenté (40) disposé sur la couche d'ancrage MCrAlY, dans lequel le revêtement (40) comprend environ 30 pour cent en poids d'oxydes de zirconium et de gadolinium ou environ 59 pour cent en poids d'oxydes de zirconium et de gadolinium.

2. Composant revêtu selon la revendication 1, dans lequel le revêtement d'oxydes de zirconium et de gadolinium (40) comprend une segmentation verticale à l'intérieur approximativement perpendiculaire à une surface du substrat métallique (20) sur laquelle le revêtement d'oxydes de zirconium et de gadolinium segmenté est finalement disposé.

3. Composant revêtu selon la revendication 1 ou 2, dans lequel le revêtement d'oxydes de zirconium et de gadolinium (40) comprend 4 à 50 microfissures sensiblement verticales par pouce (1,6 à 20 microfissures par cm).

4. Composant revêtu selon la revendication 1, 2 ou 3, dans lequel le revêtement d'oxydes de zirconium et de gadolinium (40) comprend une moyenne d'environ 25 microfissures sensiblement verticales par pouce (environ 10 microfissures par cm).

5. Composant revêtu selon l'une quelconque des revendications précédentes, dans lequel le substrat métallique (20) comprend un composant de moteur à turbine à gaz non revêtu.

6. Composant revêtu selon la revendication 5, dans lequel le composant de moteur à turbine à gaz comprend au moins un élément parmi : un élément d'étanchéité à l'air externe de pale, une paroi flottante de brûleur, une pale de turbine, une aube de turbine, un panneau de chambre de combustion, un boîtier d'échappement de turbine, et une chemise de dispositif d'augmentation de poussée.

7. Composant revêtu selon l'une quelconque des revendications précédentes, dans lequel le revêtement d'oxydes de zirconium et de gadolinium (40) est un système de revêtement céramique segmenté comprenant :
une couche d'apprêt de base (42) ;
une couche intermédiaire graduelle (44) disposée sur la couche d'apprêt de base ; et
une couche supérieure abradable d'oxydes de zirconium et de gadolinium (46) disposée sur la couche intermédiaire graduelle,
dans lequel la couche intermédiaire graduelle comprend un mélange de composition de la couche d'apprêt de base et la couche supérieure abradable d'oxydes de zirconium et de gadolinium.

8. Composant revêtu selon la revendication 7, dans laquelle la couche d'apprêt de base (42) comprend au moins un élément parmi :
de la zircone stabilisée à la magnésie, de la zircone stabilisée à l'oxyde de calcium, de la zircone stabilisée à l'oxyde d'yttrium, d'oxydes de zirconium et de gadolinium, et leurs mélanges.

9. Procédé de production d'un revêtement d'oxydes de zirconium et de gadolinium segmenté, le procédé comprenant les étapes consistant à :
fournir un substrat métallique (20) ; et
appliquer une couche d'ancrage MCrAlY (30) sur le substrat métallique, où M représente du nickel, du cobalt, du fer ou un mélange de ces derniers ;
**caractérisé par** :
la projection par plasma d'un revêtement d'oxydes de zirconium et de gadolinium (40) sur la couche d'ancrage MCrAlY avec une distance pistolet de projection-pièce constante de 1 à 5 pouces (2,5 à 12,7 cm) de façon à induire une segmentation dans le revêtement d'oxydes de zirconium et de gadolinium pendant la projection par plasma de ce dernier, dans lequel le revêtement (40) comprend environ 30 pour cent en poids d'oxydes de zirconium et de gadolinium ou environ 59 pour cent en poids d'oxydes de zirconium et de gadolinium.

10. Procédé selon la revendication 9, dans lequel le revêtement d'oxydes de zirconium et de gadolinium (40) comprend une segmentation verticale à l'intérieur approximativement perpendiculaire à une surface du substrat métallique (20) sur laquelle le revêtement d'oxydes de zirconium et de gadolinium est projeté par plasma.

11. Procédé selon la revendication 9 ou 10, dans lequel le revêtement d'oxydes de zirconium et de gadolinium (40) comprend 4 à 50 microfissures sensiblement verticales par pouce (1,6 à 20 microfissures par cm).

12. Procédé selon la revendication 9, 10 ou 11, dans lequel le revêtement d'oxydes de zirconium et de gadolinium (40) comprend une moyenne d'environ 25 microfissures sensiblement verticales (environ 10 microfissures par cm).
